(19) Europäisches Patentamt
European Patent Office
Office européen des brevets

(11) Publication number: 0 252 878 B1

(12) **EUROPEAN PATENT SPECIFICATION**

(45) Date of publication of the patent specification: **22.11.90**

(51) Int. Cl.⁵: **C08G 77/46**, C08L 23/04, H01B 3/44

(21) Application number: **87810368.8**

(22) Date of filing: **26.06.87**

(54) **Voltage stabilized polyolefin compositions and silicone-glycol derivatives suitable therefor.**

(30) Priority: **02.07.86 US 881539**

(43) Date of publication of application: **13.01.88 Bulletin 88/2**

(45) Publication of the grant of the patent: **22.11.90 Bulletin 90/47**

(84) Designated Contracting States: **DE FR GB IT**

(56) References cited:
**DD-A- 210 811**
**FR-A- 1 590 602**
**GB-A- 955 916**
**US-A- 4 305 849**
**US-A- 4 400 429**

(73) Proprietor: **CIBA-GEIGY AG, Klybeckstrasse 141, CH-4002 Basel(CH)**

(72) Inventor: **Dexter, Martin, 416 Cedar Drive, Briarcliff Manor New York 10510(US)**
Inventor: **Steinberg, David H., 2216 Wilson Avenue, New York New York 10469(US)**

**EP 0 252 878 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an electrical insulation composition comprising an olefin polymer and esters and urethanes of certain polydialkylsiloxanepolyoxyalkylene block and graft copolymers. The olefin polymer is in particular polyethylene, crosslinked polyethylene and similar polyolefin dielectric materials used as insulators for wire to combat electrical failure at elevated voltages in a wet environment.

Additionally, the invention relates to wires and cables insulated with said insulating compositions, to a method of stabilizing olefin polymers against electrical failure by incorporating therein esters and urethanes of certain polydialkylsiloxanepolyoxyalkylene block and graft copolymers as well as novel esters and urethanes of this type.

Polymeric compositions are extensively used as insulation materials for high voltage wire and cable. Olefin homo- and copolymers are the insulation materials of choice for high voltages (5000 and more volts) based on desirable electrical and physical properties such as dielectric strength; toughness, such as resistance to cutting and abrasion; ageing characteristics; resilience; and minimal cracking on mechanical stress. Polyethylene, polypropylene and blends thereof polymerized in different densities as well as copolymers thereof with each other and other comonomers are usually used.

It has been noted that such polyolefin-based materials when used as insulation materials in high voltage distribution wires and cable are prone to deterioration under voltage stress in wet environment resulting in electrical failure. The latter deterioration may result from a degradation phenomenon identified as "water trees". Under high voltage wet-stress, microscopic channels, i.e. dendritic voids, appear in the insulation. These have a tree-like appearance - hence, the name. Such failure is most disadvantageous. This problem is now aggravated in that many high voltage cables are buried for greater reliability (decrease of damage from high winds, ice storms, etc.) and for aesthetic reasons. Over extended periods of time, short circuits have occurred in such buried cables resulting in loss of service. These cables have to be removed by excavation and replaced, a time consuming and costly operation.

Many classes of chemical compound additives have been disclosed in the prior art as effective voltage stabilizers, i.e. suppressants for electrical failure, water-treeing and/or electrical-treeing (microscopic dentrites caused by corona arcing). These prior art disclosures include voltage stabilizers based on silicon derivatives, furfuryloxy phosphites and high-molecular weight polyethylene oxide.

In the prior art, US-A 4 305 849 teaches the use of polyethylene glycols having molecular weights of from about l,000 to 20,000 as voltage stabilizers. US-A 4 144 202 and 4 263 158 teach the use of organosilane compounds containing azomethine groups as voltage stabilizers. US-A 4 376 180, discloses the use of 3-(N-phenylaminopropyl-tridodecyloxysilane) as a voltage stabilizer. US-A 4 440 671 discloses the use of a blend of hydrocarbon-substituted diphenyl amine and a high molecular weight polyethylene glycol for this purpose. US-A 4 514 535 discloses the use of tritetrahydrofurfuryloxy phosphite as a voltage stabilizer. US-A 4 374 224 discloses the use of an organic carboxylic ester having at least one aromatic ring and at least three carboxylic ester groups as a voltage stabilizer. US-A 3 553 348 describes the use of filler minerals such as magnesium silicate, pretreated with alkyl and vinyl alkoxysilanes, as voltage stabilizers.

This invention is based on the discovery that a group of polydialkylsiloxanepolyoxyalkylene block and graft copolymers, and preferably polydimethylsiloxanepolyoxyethylene block and graft copolymers, have the quality of effectively stabilizing insulated wires against high voltage stresses in an aqueous environment.

More particularly, this invention relates to an electrical insulation composition comprising an olefin polymer and of least one ester or urethane derivative of a silicone-glycol corresponding to (I) a block copolymer of the formula

$$R{-}E{-}[(CH_2)_dO]_b{-}(CH_2)_x{-}\underset{R^1}{\overset{R^1}{|}}\!\!\!\!\!\;SiO{-}(\underset{R^1}{\overset{R^1}{|}}\!\!\!\!\!\;SiO)_a{-}\underset{R^1}{\overset{R^1}{|}}\!\!\!\!\!\;Si{-}(CH_2)_x{-}[O(CH_2)_d]_b{-}G{-}R \qquad (I)$$

wherein a is 2-l00;
b is l-l00;
x is 2-8;
d is 2-4;

E is 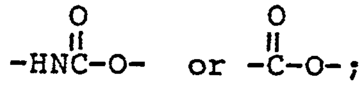 or ;

G is 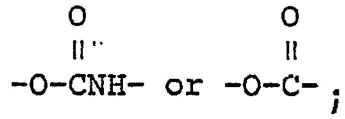 or ;

$R^1$ is $C_1$-$C_6$alkyl
R is $C_4$-$C_{30}$alkyl, phenyl,

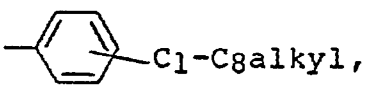 , 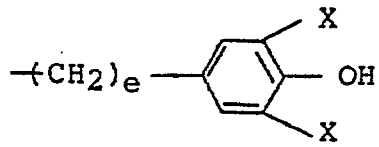 or 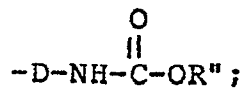 ;

e is 1–6;
X is independently $C_1$-$C_{18}$alkyl or $C_5$-$C_{12}$cycloalkyl;
D is $C_1$-$C_6$alkylene, phenylene, $C_7$-$C_9$aralkylene or diphenylene-methane; and
R″ is $C_4$-$C_{30}$alkyl, phenyl,

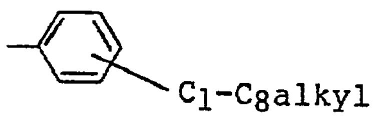

or 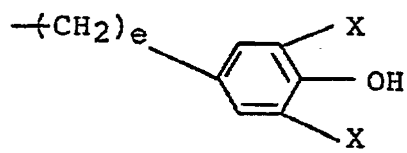 ;

(Ia) a block copolymer of the formula

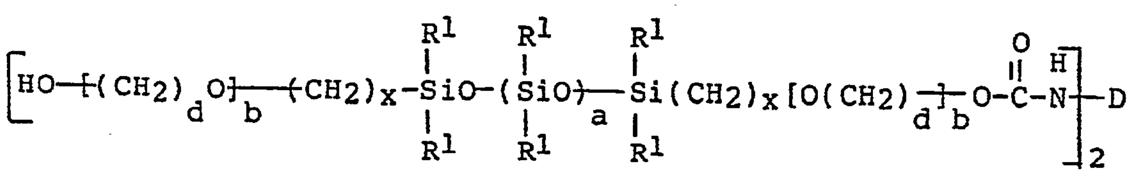

(Ia)

wherein a, b, d, x, $R^1$ and D are defined as above;
(II) a silicon graft polymer of the formula

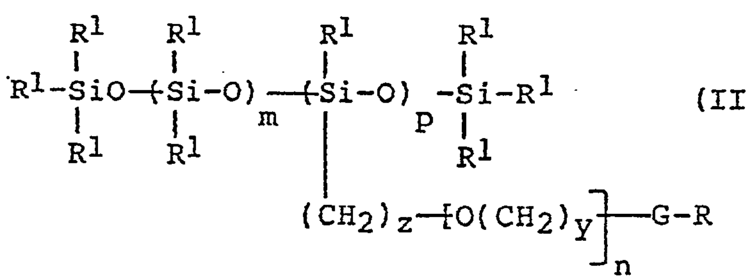 (II)

where m is 2–100, n is 1–100, p is 2–4, y is 2–4, z is 2–8 and G, R and $R^1$ are as set forth above.

Preferred and most preferred values and substituents include a = 6–24 (13–17), b = 8–30 (10–14), x and z = 3, d = 2, m = 3–12 (4–8), n = 6–30 (11–15), p = 3 and y = 2 with the various alkyl groups R preferably having a maximum of 18 carbon atoms and including, for example, n-butyl, hexyl, 2-ethylhexyl, n-octyl, decyl, dodecyl and octadecyl. X is preferably $C_4$–$C_8$alkyl, in particular branched $C_4$–$C_8$alkyl, such as tert-butyl, tert-pentyl and tert-octyl, or cyclohexyl. D is preferably $C_1$–$C_6$alkylene such as, for example, methylene, ethylene and hexylene. $R^1$ is preferably $C_1$–$C_4$alkyl, most preferably methyl.

For purposes of ease of description, the polymers of formula I, Ia and II will be referred to as esters whether they are urethanes, the reaction products of the hydroxy-terminated polymers with isocyanates; or true esters.

In formula I, the substituents are preferably:

$R^1$ $C_1$–$C_4$ alkyl, most preferably methyl;

E 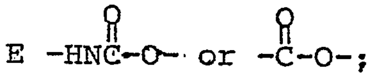

G 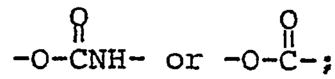 R $C_4$–$C_{18}$alkyl, 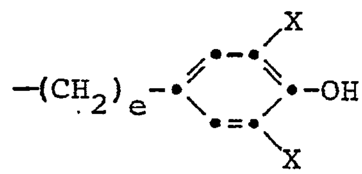

with e being preferably 2 and X branched $C_4$–$C_8$alkyl, preferably t-butyl, or R is

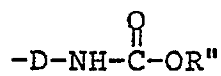

with R″ being $C_4$–$C_{18}$alkyl and D being $C_1$–$C_6$alkylene. In formula Ia, D and $R^1$ have the same preferred meanings as given for formula I. In formula II $R^1$, G and R have the same preferred meanings as given for formula I.

Preferred ester or urethane derivatives of silicone-glycol polymers present in the compositons of this invention are those of formula I, in particular those wherein a is 6–24 and b is 8–30, most preferably those wherein a is 13–17, b is 10–14, x is 3, d is 2, R′ is $CH_3$ and X is branched $C_4$–$C_8$alkyl.

Further examples of preferred compounds of the formula I are those

(a) of the formula

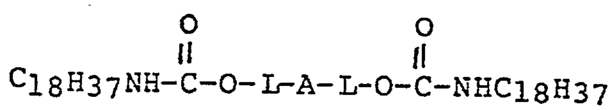

wherein A is

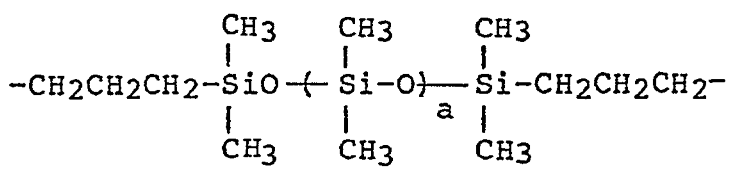 ;

L is

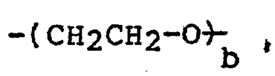 ,

a is ~15 and b is ~12;

(b) of the formula

$$C_6H_{13}NH-\overset{O}{\overset{\|}{C}}-O-L-A-L-O-\overset{O}{\overset{\|}{C}}-NHC_6H_{13}$$

where A and L are as defined above;

(c) of the formula

$$C_6H_5NH-\overset{O}{\overset{\|}{C}}-O-L-A-L-O-\overset{O}{\overset{\|}{C}}-NHC_6H_5$$

wherein A and L are as defined above;

(d) of the formula

$$C_{18}H_{37}O\overset{O}{\overset{\|}{C}}NH(CH_2)_6NH\overset{O}{\overset{\|}{C}}O-L-A-L-O\overset{O}{\overset{\|}{C}}NH(CH_2)_6NH\overset{O}{\overset{\|}{C}}-OC_{18}H_{37}$$

wherein A and L are as defined above;

(e) of the formula

$$C_{17}H_{35}\overset{O}{\overset{\|}{C}}O-L-A-L-O\overset{O}{\overset{\|}{C}}C_{17}H_{35}$$

wherein A and L are as defined above, and

(f) of the formula

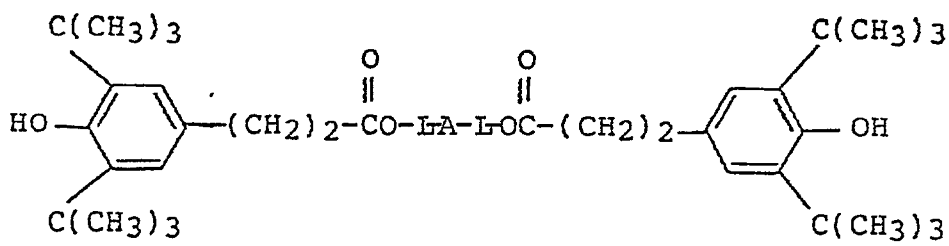

(VI)

wherein A and L are as defined above.

Further ester or urethane derivatives present in the compositions of this invention to be mentioned are those of formula Ia, in particular those wherein a is 6–24 and b is 8–30, preferably those wherein a is 13–17, b is 10–14, x is 3, d is 2 and R′ is $CH_3$.

Further examples of preferred compounds of the formula Ia are those of the formula

$$HO-L-A-L-O-\overset{O}{\overset{\|}{C}}-NH-(CH_2)_6-NH-\overset{O}{\overset{\|}{C}}-O-L-A-L-OH$$

wherein A and L are as defined above.

To be singled out are also the ester or urethane compounds contained in the compositions of this invention which correspond to the formula II, in particular those wherein m is 3–12 and n is 6–30, preferably those wherein m is 4–8, n is 11–15, p is 3, z is 3, y is 2, $R^1$ is $CH_3$, and X is branched $C_4$–$C_8$alkyl.

Examples of preferred compounds of the formula II are those of the formulae

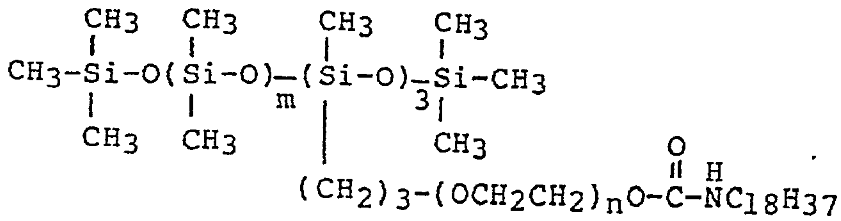

wherein m is ~6 and n is ~13,

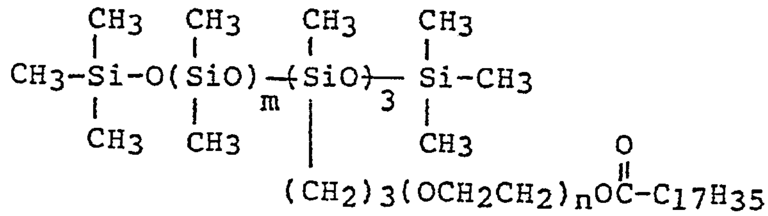

wherein m is ~6 and n is ~13 and

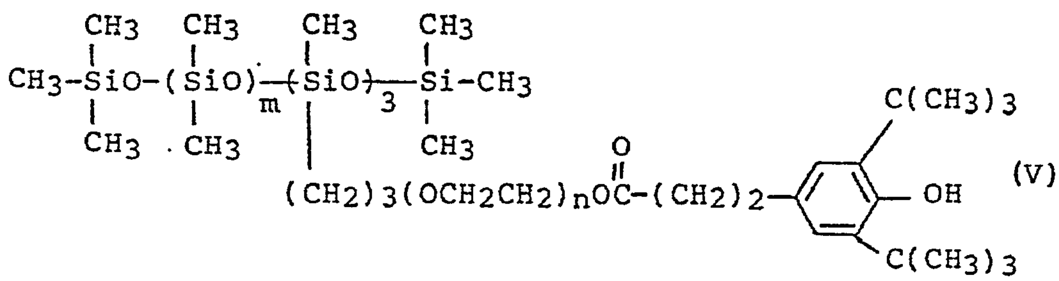
(V)

wherein m is ~6 and n is ~13.

The compounds of formulae I, Ia and II can be prepared by methods known per se, for example by reacting silane polymers compounds including hydroxy terminated BAB-type block copolymers of the formula

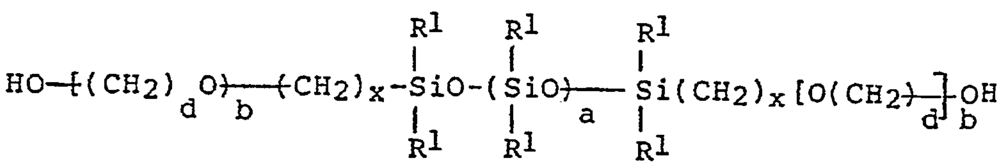
(III)

wherein a, b, d, x and $R^1$ are as previously defined (as represented for example by the copolymer having a = ~15, b = ~12, d = 2, x = 3 and $R^1 = CH_3$ marketed as Dow Corning Fluid Q4-3667); or a graft copolymer having the structure:

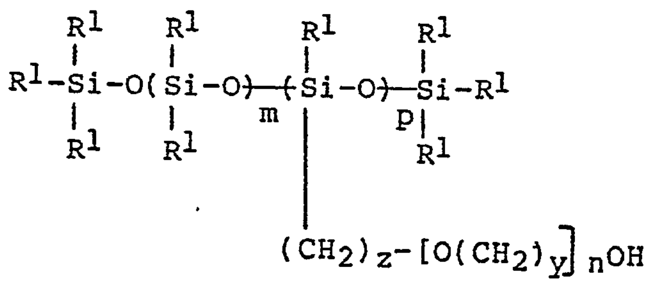

wherein m, n, p, y, z and $R^1$ are as previously defined (as represented, for example, by the copolymer

having m = ~6, n = ~l3, p = ~3, y = 2, z = 3 and $R^1$ = $CH_3$ marketed as Dow Corning Surfactant l93); with an isocyanate or acid having the formulae

R-NCO or RCOOH

wherein R is as previously defined.

Esters of carboxylic acids may be prepared using reaction conditions well known in the art. Thus, the carboxylic acid and the hydroxy terminated polydialkylsiloxanepolyoxyalkylene block or graft copolymer can be heated in a suitable solvent such as toluene at ll0-l50°C. The water produced by esterification is separated during the course of the reaction. An acid catalyst such as toluene sulfonic acid may be used to decrease the reaction time.

Correspondingly, the urethanes may be prepared by reacting a hydroxy terminated polydialkylsiloxanepolyoxyalkylene block or graft copolymer with an appropriate isocyanate. The reactants may be reacted with or without the use of a solvent. The reaction temperature may range from 50–150°C.

Typical examples of isocyanates include butyl, hexyl, octyl, octadecyl, phenyl, tolyl and naphthyl isocyanate. The resulting urethanes and esters are the compounds of this invention. In addition to the isocyanates and acids mentioned above, diisocyanates and dicarboxylic acids (OCN-D-NCO and HOOC-D-COOH) may also be condensed with the silane copolymer reactants to form active voltage stabilizer compounds, for example those of formula Ia. Typical examples of diisocyanates include 1,6-diisocyanatohexane, tolylene-2,4-diisocyanate and diphenyl-methane diisocyanate. Typical examples of dicarboxylic acids include oxalic, succinic, maleic, adipic, isophthalic and terephthalic acids, and the like. The molar ratio of silicon glycol to diisocyanate or diacid will determined whether the product corresponds to formula I or to formula Ia.

The active compounds of formulae I, Ia and II are formulated into the compositions of this invention in effective amounts, preferably in the range of 0.1% to 5%, by weight, and most preferably 0.3 to 3.0%.

The invention further relates to a method of stabilizing an insulating olefin polymer against electrical failure which comprises incorporating therein at least one silicon-glycol compound of formula I, Ia or/and II.

As previously noted, the insulation materials are olefin polymers. Such olefin polymers include, for example, low and high density polyethylene; polypropylene; ethylene-propylene copolymers; polybutene; polyisobutylene; polymethylbutene; polymethylpentene; copolymers of ethylene and diene monomers such as butadiene, isoprene and the like; terpolymers of ethylene, propylene and diene monomers; copolymers of ethylene and other α-olefins such as butylene and octylene; copolymers of ethylene and vinyl monomers such as vinyl acetate, ethyl acrylate and methyl methacrylate; and blends of polyethylene with polyvinyl acetate, ethylene-propylene copolymer or polyhydroxyethylacrylate. These olefin polymers can also be crosslinked. Crosslinking agents are well known to those skilled in the art and can include for example, organic peroxides. Preferred are thermoplastic olefin (especially α-olefin) homopolymers or copolymers with other olefins or other comonomers as recited above, as well as blends of such polymers. High and low density polyethylene and crosslinked low density polyethylene are preferred for use in this invention.

The compositions of this invention can additionally contain antioxidants such as sterically hindered phenols, aromatic amines, polymerized 2,2,4-tetramethylhydroquinoline, 4,4'-thio-bis(3-methyl-6-tertbutylphenol), thio-diethylene-bis(3,5-di-tert-butyl-4-hydroxy)hydrocinnamate, distearylthiodipropionate, and the like. In addition, materials commonly added to olefin polymer compositions to be used in electrical applications can also be used herein.

The resulting insulation is applied to conductors to form insulated wires and cables. The resulting wires and cables on testing have excellent resistance to deterioration under high voltage stress conditions. The present invention includes, therefore, also electric wires and cables insulated with the aforementioned electric insulation polyolefin compositions.

Thus, the insulation compositions of this invention increase the stability of insulated wires under high voltage and wet environments, thereby decreasing the tendency for insulation to fail under extended use at high voltages.

More specifically, the compounds discussed above have voltage stabilizing properties of varying degree. They are, however, sufficiently active to at least double the failure time over controls of crosslinked polyethylene insulation that do not contain voltage stabilizers.

Some of the compounds of formulae I, Ia and II are known per se. However, most of them are novel. Therefore, the present invention also relates to compounds of formulae I, Ia and II wherein R cannot be $C_4$–$C_{10}$ alkyl, phenyl or tolyl, when E is

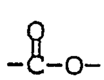

and G is

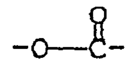

in formula I and when G is

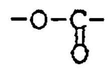

in formula II. Preferred meanings of symbols and preferred compounds according to this invention can be derived accordingly from the parts above describing formulae I, Ia and II and their preferred meanings.

The following examples illustrate the preparation of various compounds of formulae I, Ia and II. They also include the preparation of insulating compositions with these compounds and the coating of compositions therewith.

Example I

A reaction vessel is charged with 84 g (70 meq) of Dow Corning Fluid Q4-3667, a dihydroxy terminated polydimethylsiloxane polyethyleneoxide copolymer (described in more detail above), 2l g (7l.6 meq) of n-octadecyl isocyanate and l05 g of toluene and then heated at 95°C for 5 hours. An infrared analysis shows that the reaction between the isocyanate and terminal hydroxy groups of the silicon derivative is complete. The solvent is removed by distillation under reduced pressure to yield l02 g of an oily product which solidifies on standing to a waxy solid with the following structure:

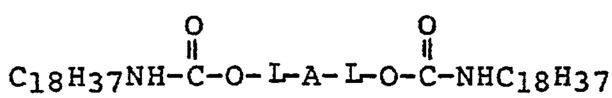

A = 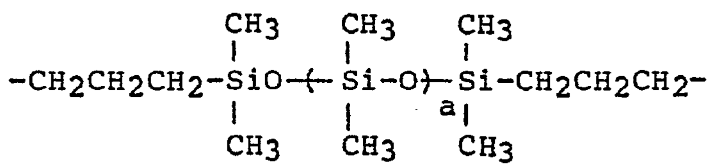

L = $-(CH_2CH_2-O)_b-$

a =~15, b =~12

a =~l5, b =~l2

Examples 2 and 3

These products are prepared using the procedure described in Example I except that n-octadecyl isocyanate is replaced with a chemically equivalent amount of hexyl isocyanate in Example 2 and phenyl isocyanate in Example 3.

Examples 2 and 3 are both liquids of the following structures:

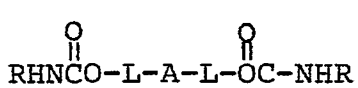

Example 2 - R = n-$C_6H_{13}$
Example 3 - R = phenyl
A and L as defined in Example I.

Example 4

A solution of 44.32g (l50 meq) of n-octadecyl isocyanate and l50 ml toluene are added to a solution of l20g (l50 meq) of Dow Corning Surfactant l93 (described hereinabove) in l50 ml toluene. The mixture is heated for l2 hours at 94°C to complete the reaction between the hydroxyl and isocyanate groups. The solvent is removed by distillation under reduced pressure yielding the product, an off-white waxy solid at room temperature.

The structure of the compound is shown below:

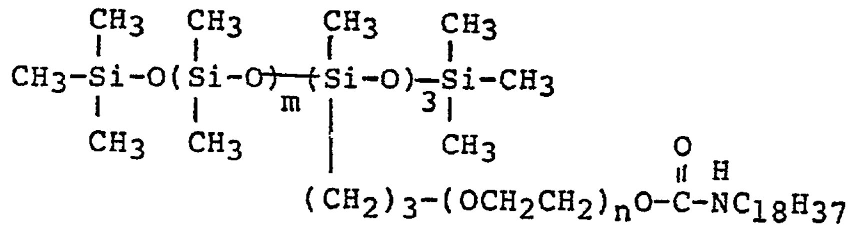

m =~ 6
n =~ 13

Example 5

A reaction vessel is charged with 240g (200 meq) of Dow Corning Fluid Q4-3667 and then, with stirring, 8.2lg (l00 meq) of l,6-diisocyanatohexane. The mixture is heated to 95°C and maintained at that temperature for l0 hours. At the end of this heating period, the reaction of the isocyanate and hydroxyl groups is complete as evidenced by infrared examination of the reaction mixture. The product is a yellow liquid. The following structure is a representation of the most probable composition:

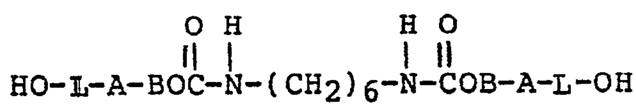

wherein A and L are defined as in Example l.

Example 6

A solution of 240g (200 meq) of Dow Corning Fluid Q4-3667 and l00 ml toluene is admixed with a solution of 32.44g (400 meq) of l,6-diisocyanatohexane and 200 ml toluene. The mixture is heated at 95-l00°C for l0 hours. The reaction mass becomes rubber-like in consistency. l000 ml of toluene are added to thin out the mixture so that it becomes stirrable. The diluted mixture is admixed with a solution of 56.8g (2l0 meq) of n-octadecanol. The solution is heated for 4 hours at 30-33°C. After removal of the toluene under reduced pressure, 30lg of a white rubber-like solid are obtained.

Probable structure:

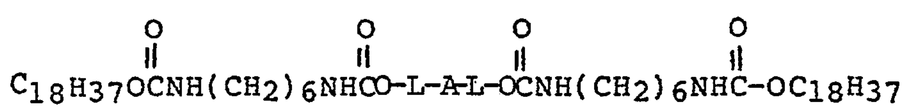

wherein A and L are defined in Example l.

Example 7

A solution of l4.23g (0.05 mol) stearic acid, 60.0g Dow Corning Fluid Q4-3667 (0.05 eq), 800 mg p-toluene sulfonic monohydrate acid and 300 ml toluene is heated under nitrogen. After 7 hours, 7 ml water are collected in a Dean-Stark trap. 350 mg of additional p-toluene sulfonic acid monohydrate is added and the mixture heated for 5 hours. An additional 0.l ml $H_2O$ is collected. The reaction mixture is cooled and extracted with l0% sodium chloride solution to remove p-toluene sulfonic acid. The toluene phase is dried over anhydrous sodium sulfate. After separating the sodium sulfate by filtration, the toluene is distilled under reduced pressure to yield as a residue the stearic acid ester of Q4-3667, a white waxy product. The IR spectrum conforms with the assigned structure

$C_{18}H_{37}COO-L-A-L-OOCC_{18}H_{37}$
(A and L as defined in Example I)

Example 8

This product is prepared by the same general procedure used in Example 7 except that the following reactants are used: Dow Corning Surfactant I93-64g (0.88 eq) and stearic acid-22.8g (0.08 eq). 360 ml toluene are used as a reaction solvent and 870 mg p-toluene sulfonic acid monohydrate as a catalyst. The stearic acid ester of Dow Corning Surfactant I93 product is a white waxy solid. The infrared spectrum conforms with the desired structure

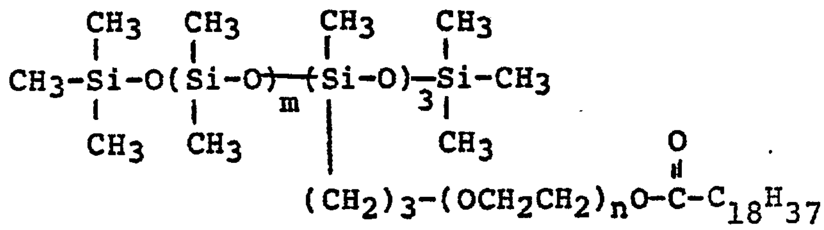

m = ~6
n = ~13

Example 9

3,5-di-tert-butyl-4-hydroxydihydrocinnamic acid ester of Dow Corning Fluid Q4-3667

6.55g (0.5I6 mol) of oxalyl chloride are added over a I5 minute period to a mixture of I3.92g (0.05 mol) of 4-hydroxy-3,5-di-tert-butyl-dihydrocinnamic acid in I25 ml of methylene chloride. The mixture is stirred and maintained at 0.5°C. A slow stream of nitrogen is passed through the mixture during the addition. After the addition is complete, the mixture is allowed to come to room temperature and stirred overnight (I8 hours). A solution of Dow Corning Fluid Q4-3667 60.0g (0.05 eq) and 3.95g (0.05 mol) pyridine in 60 ml methylene chloride is added to the solution of 4-hydroxy-3,5-di-tert-butyl-dihydrocinnaminoylchloride over a period of 30 minutes. After the addition, the reaction mixture is allowed to warm to room temperature and stirred for 60 hours. 200 ml of ethyl ether are added to the reaction mixture and the precipitated pyridine hydrochloride is removed by filtration. The filtrate is evaporated under reduced pressure to yield 7I.6g of a viscous liquid residue. NMR analysis conforms with the desired ester product of the formula VI above.

Example I0

3,5-di-tert-butyl-4-hydroxydihydrocinnamic acid ester of Dow Corning Surfactant I93

The preparation of the 3,5-di-tert-butyl-4-hydroxydihydrocinnamic acid ester of Dow Corning Surfactant I93 is conducted by the procedure of Example 9 except that 40g (0.05 eq) of Dow Corning Surfactant I93 is substituted for 60.0g (0.05 eq.) of Dow Corning Fluid Q4-3667. The product of this reaction is a colorless viscous oil (5I.9g). The NMR analysis conforms with the assigned structure of the formula V above.

Example II

Method for preparing insulation compositions

Low density polyethylene (I000 g ) is fluxed in a water-jacketed Banbury mill, the temperature of the polyethylene not being allowed to exceed I05°C. To the fluxed polyethylene is added 2 g of thiodiethylene bis-(3,5-di-tertiary-butyl-4-hydroxy)hydrocinnamate, 3 g of dioctadecylthiodipropionate, 20 g of dicumyl peroxide and I0 g (I.0 % by weight) of a voltage stabilizer specified in Table I below. After the formulation is thoroughly mixed, it is removed from the Banbury mill and, while still hot and plastic, is rolled into sheets on a two-roll mill. The sheets are cooled and then chopped into granules.

Preparation of insulated wire for testing insulation compounds

The granules are extruded over a #14 gauge [$1,63 \cdot 10^{-3} \times 1,63 \cdot 10^{-3}$ m (64×64 mil)] square copper wire using a round die. The outer diameter of the insulation is $3,1 \cdot 10^{-3}$ m (124 mil). The polymer is

crosslinked by heating in a steam vulcanizing tube at 17,25 bar (250 pounds) of steam pressure for two minutes. At the end of the two minute heating period, the wire is cooled in water under a pressure of 17,25 bar (250 pounds).

Test Procedure

The coated wires to be tested are freed of volatiles such as acetophenone by being baked for 3 weeks at 80°C. For each formulation, ten × 30 cm lengths of the insulation coated and baked wire are placed in a 50°C water bath. A potential difference of 7500 V 60 $H_z$ is applied between the copper conductor and the water bath. At failure, the insulation is perforated permitting water to contact the conductor causing a short circuit. The time required for the failure of the fifth sample is recorded as the failure time for the series of the ten insulated conductors. The results are listed in Table I.

Table I

Test Results

| Stabilizer | Hours to Failure |
|---|---|
| Control (no stabilizer) | 181 |
| Example 1 | 1579 |
| Example 2 | 790 |
| Example 3 | 790 |
| Example 4 | 1170 |
| Example 5 | 733 |
| Example 6 | 539 |
| Example 9* | 593 |
| Example 10* | 959 |

*Separate test series

From the above, it can been seen that the polymeric compositions of this invention provide excellent protection against electrical failure.

Summarizing, it is seen that this invention provides silicon-containing polymeric compositions for use as effective voltage stabilizers in insulaters for wire and cable. Variations may be made in proportions, procedures and materials without departing from the scope of the invention as defined by the following claims.

**Claims**

1. An electrical insulation composition comprising an olefin polymer and at least one ester or urethane derivative of a silicone-glycol corresponding to (I) a block copolymer of the formula

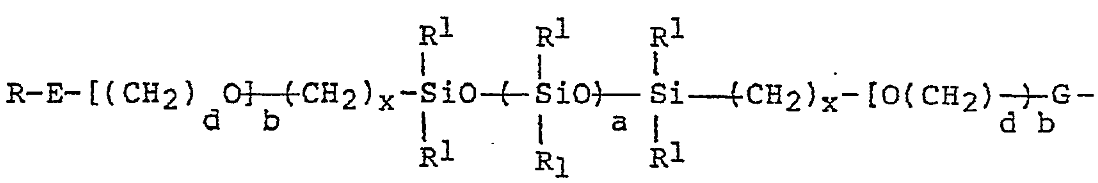

(I)

wherein a is 2–100;
b is 1–100;
x is 2–8;
d is 2–4;

E is 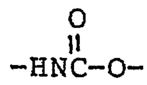 or 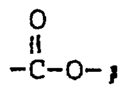;

G is 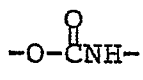 or 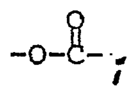;

$R^1$ is $C_1$–$C_6$alkyl,
R is $C_4$–$C_{30}$alkyl, phenyl,

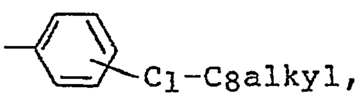 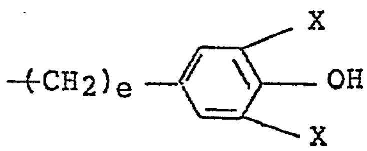 or 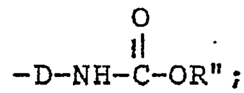;

e is 1–6;
X is independently $C_1$–$C_{18}$alkyl or $C_5$–$C_{12}$cycloalkyl;
D is $C_1$–$C_6$alkylene, phenylene, $C_7$–$C_9$aralkylene or diphenylene-methane; and
R″ is $C_4$–$C_{30}$alkyl, phenyl,

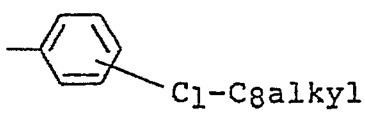

or 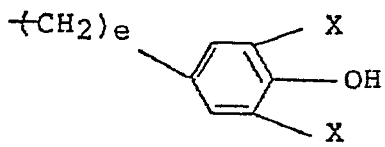 ;

(Ia) a block copolymer of the formula

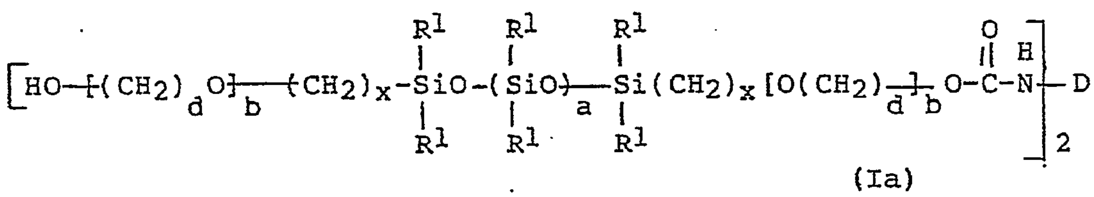

(Ia)

wherein a, b, d, x, $R^1$ and D are defined as above;
(II) a silicon graft polymer of the formula

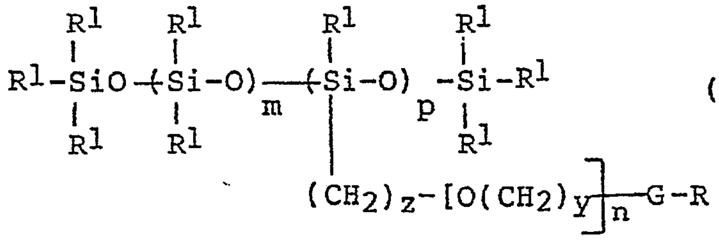 (II)

where m is 2–100, n is 1–100, p is 2–4, y is 2–4, z is 2–8 and G, R and $R^1$ are as set forth above.

2. The composition of claim 1 containing a block copolymer of formula I.

3. The composition of claim 2, wherein a is 6–24 and b is 8–30.

4. The composition of claim 3, wherein a is 13–17, b is 10–14, x is 3, d is 2, R′ is $CH_3$ and X is branched $C_4$–$C_8$alkyl.

5. The composition of claim 1 containing a block copolymer of formula Ia.

6. The composition of claim 5, wherein a is 6–24 and b is 8–30.

7. The composition of claim 6, wherein a is 13–17, b is 10–14, x is 3, d is 2 and R′ is $CH_3$.

8. The composition of claim 1 contining a silicon graft polymer of formula II.

9. The composition of claim 8, wherein m is 3–12 and n is 6–30.

I0. The composition of claim 9, wherein m is 4–8, n is 11–15, p is 3, z is 3, y is 2, $R^1$ is $CH_3$, and X is branched $C_4$–$C_8$alkyl.

11. The composition of any one of claims 1 to 10, wherein said silicone–glycol derivative is present is a concentration ranging from about 0.1%–5%, by weight.

12. Electric wire or cable insulated with the electric insulation composition of any one of claims 1 to 11.

13. A method of stabilizing an insulating olefin polymer against electrical failure which comprises incorporating therein at least one silicone–glycol compound as defined in any one of claims 1 to 10.

14. A silicone–glycol derivative of the formula I, Ia or II as defined in any one of claims 1 to 10, with the proviso that R cannot be $C_4$–$C_{10}$alkyl, phenyl or tolyl when E is

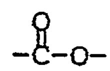

and G is

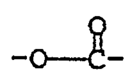

in formula I and when G is

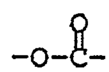

in formula II.

**Patentansprüche**

1. Elektrische Isolationszusammensetzung enthaltend ein Olefinpolymer und mindestens ein Ester- oder Urethanderivat eines Silikon-Glykols, welches

(I) einem Blockcopolymer der Formel

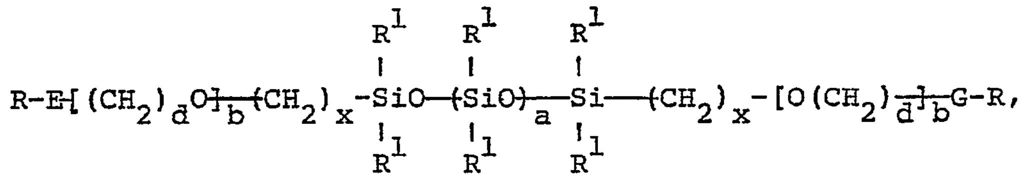

(I)

worin a 2-100, b 1-100, x 2-8, d 2-4, E $-HN\overset{\overset{O}{\|}}{C}-O-$ oder $-\overset{\overset{O}{\|}}{C}-O-$, G $-O-\overset{\overset{O}{\|}}{C}NH-$ oder $-O-\overset{\overset{O}{\|}}{C}-$, $R^1$ $C_1$-$C_6$-Alkyl, R $C_4$-$C_{30}$-Alkyl, Phenyl,

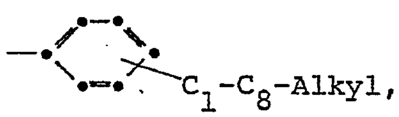

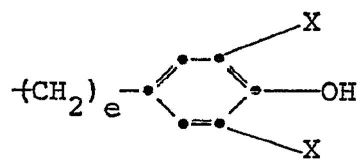

oder $-D-NH-\overset{\overset{O}{\|}}{C}-OR''$,

e 1–6, beide X unabhängig voneinander $C_1$–$C_{18}$-Alkyl oder $C_5$–$C_{12}$-Cycloalkyl, D $C_1$–$C_6$-Alkylen, Phenylen, $C_7$–$C_9$-Aralkylen oder Diphenylen-methan und R″ $C_4$–$C_{30}$-Alkyl, Phenyl,

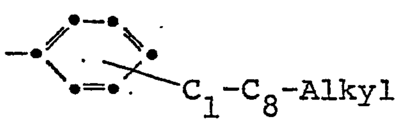

oder

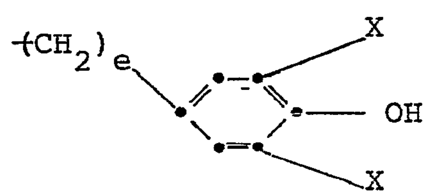

bedeuten;

(Ia) einem Blockcopolymer der Formel

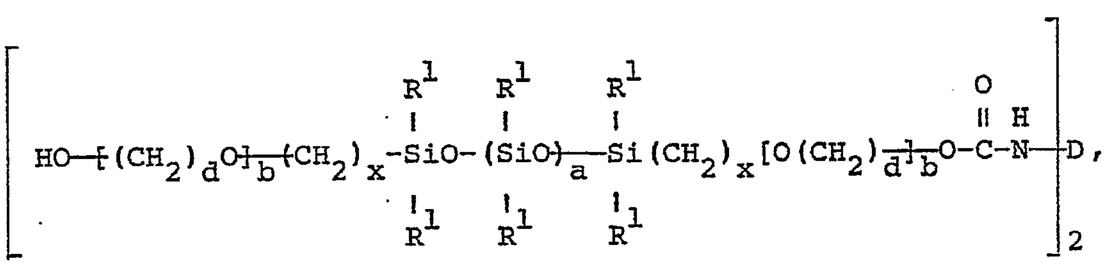

(Ia)

worin a, b, d, x, $R^1$ und D wie oben definiert sind; oder

(II) einem Silikon-Pfropfpolymer der Formel

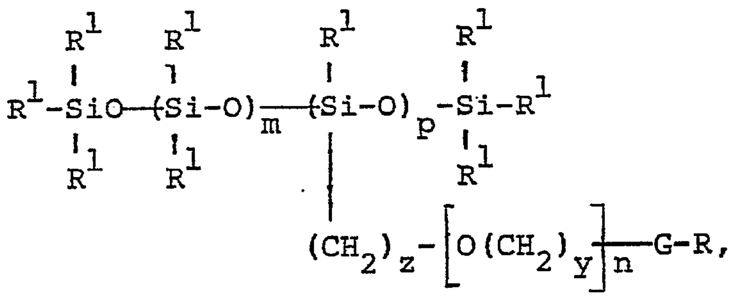

(II).

worin m 2–100, n 1–100, p 2–4, y 2–4 und z 2–8 bedeuten und G, R und $R^1$ wie oben definiert sind, entspricht.

2. Zusammensetzung nach Anspruch 1 enthaltend ein Blockcopolymer der Formel I.

3. Zusammensetzung nach Anspruch 2, worin a 6–24 und b 8–30 bedeuten.

4. Zusammensetzung nach Anspruch 3, worin a 13–17, b 10–14 x 3, d 2, $R^1$ $CH_3$ und X verzweigtes $C_4$–$C_8$-Alkyl bedeuten.

5. Zusammensetzung nach Anspruch 1, enthaltend ein Blockcopolymer der Formel Ia.

6. Zusammensetzung nach Anspruch 5, worin a 6–24 und b 8–30 bedeuten.

7. Zusammensetzung nach Anspruch 6, worin a 13–17, b 10–14, x 3, d 2 und $R^1$ $CH_3$ bedeuten.

8. Zusammensetzung nach Anspruch 1, enthaltend ein Silikon-Pfropfpolymer der Formel II.

9. Zusammensetzung nach Anspruch 8, worin m 3–12 und n 6–30 bedeuten.

10. Zusammensetzung nach Anspruch 9, worin m 4–8, n 11–15, p 3, z 3, y 2, $R^1$ $CH_3$ und X verzweigtes $C_4$–$C_8$-Alkyl bedeuten.

11. Zusammensetzung nach einem der Ansprüche 1–10, worin das Silikon-Glykol-Derivat in einer Konzentration von ungefähr 0,1–5 Gew.-% enthalten ist.

12. Elektrischer Draht oder elektrisches Kabel, welches mit einer elektrischen Isolationszusammensetzung gemäss einem der Ansprüche 1–11 isoliert ist.

13. Verfahren zum Stabilisieren eines isolierenden Polyolefins gegen elektrische Fehlströme, dadurch gekennzeichnet, dass man dem Polyolefin mindestens ein in den Ansprüchen 1–10 definiertes Silikon-Glykol-Derivat einverleibt.

14. Silikon-Glykol-Derivate der Formeln I, Ia oder II wie in den Ansprüchen 1 bis 10 definiert, mit der Massgabe, dass R nicht für $C_4$–$C_{10}$-Alkyl, Phenyl oder Tolyl steht, wenn in

Formel I E 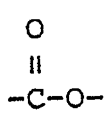 und G 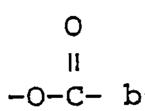 bzw. in Formel II G 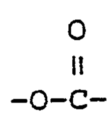

bedeuten.

## Revendications

1. Composition d'isolement électrique comprenant un polymère oléfinique et au moins ester ou uréthanne dérivé d'un silicone-glycol correspondant à (I) un copolymère séquencé de formule

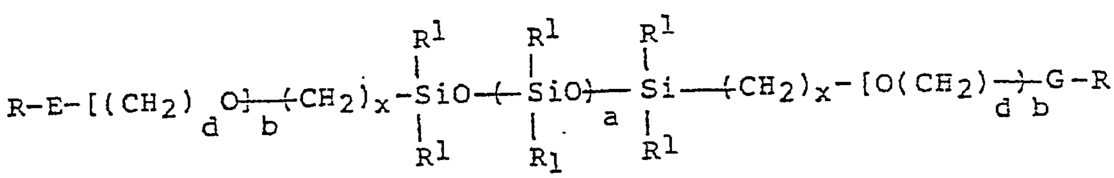

(I)

dans laquelle a vaut 2 à 100;
b vaut 1 à 100;
x vaut 2 à 8;
d vaut 2 à 4;

E est 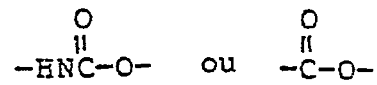 ;

G est 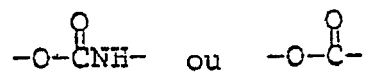 ;

$R^1$ est un groupe alkyle en $C_1$–$C_6$;
R est un groupe alkyle en $C_4$–$C_{30}$, phényle,

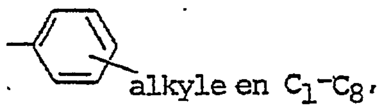 , 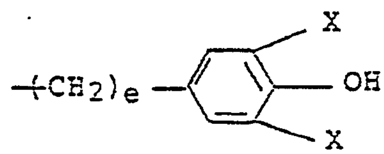 ou 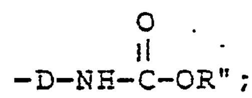 ;

e vaut 1 à 6;
X est indépendamment un groupe alkyle en $C_1$–$C_{18}$ ou cycloalkyle en $C_5$–$C_{12}$;
D est un groupe alkylène en $C_1$–$C_6$, phénylène, aralkylène en $C_7$–$C_9$ ou diphénylène méthane , et
R″ est un groupe alkyle en $C_4$–$C_{30}$, phényle,

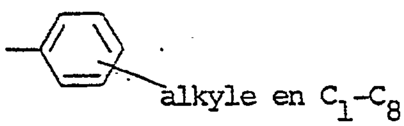 ou 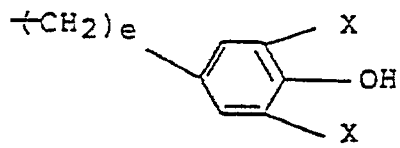 ;

(Ia) un copolymère séquencé de formule

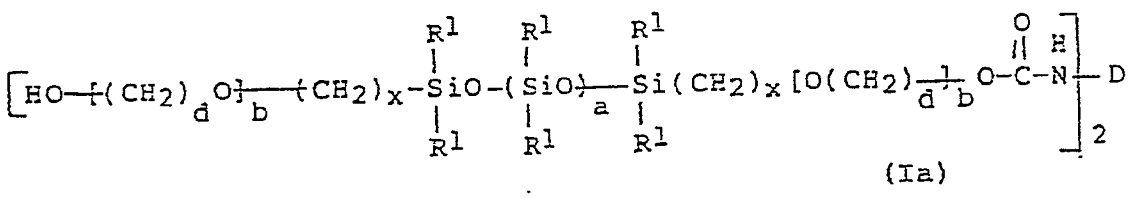

(Ia)

dans laquelle a, b, d, x, $R^1$ et D sont tels que définis ci-dessus;
(II) un polymère de silicone greffé de formule

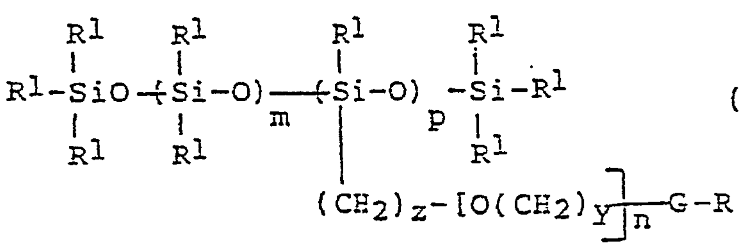

(II)

dans laquelle m vaut 2 à 100, n vaut 1 à 100, p vaut 2 à 4, y vaut 2 à 4, z vaut 2 à 8, et G, R et $R^1$ sont tels que définis ci-dessus.

2. Composition selon la revendication 1, contenant un copolymère séquencé de formule I.

3. Composition selon la revendication 2, dans laquelle a vaut 6 à 24 et b vaut 8 à 30.

4. Composition selon la revendication 3, dans laquelle a vaut 13 à 17, b vaut 10 à 14, x vaut 3, d vaut 2, $R^1$ est $CH_3$ et X est un groupe alkyle ramifié en $C_4$–$C_8$.

5. Composition selon la revendication 1, contenant un copolymère séquencé de formule Ia.

6. Composition selon la revendication 5, dans laquelle a vaut 6 à 24 et b vaut 8 à 30.

7. Composition selon la revendication 6, dans laquelle a vaut 13 à 17, b vaut 10 à 14, x vaut 3, d vaut 2 et $R^1$ est $CH_3$.

8. Composition selon la revendication 1, contenant un polymère de silicone greffé de formule II.

9. Composition selon la revendication 8, dans laquelle m vaut 3 à 12 et n vaut 6 à 30.

10. Composition selon la revendication 9, dans laquelle m vaut 4 à 8, n vaut 11 à 15, p vaut 3, z vaut 3, y vaut 2, $R^1$ est $CH_3$ et X est un groupe alkyle ramifié en $C_4$–$C_8$.

11. Composition selon l'une quelconque des revendications 1 à 10, dans laquelle ledit dérivé de silicone-glycol est présent à une concentration comprise entre environ 0,1% et 5% en poids.

12. Fil ou câble électrique isolé avec la composition d'isolement électrique selon l'une quelconque des revendications 1 à 11.

13. Procédé pour stabiliser un polymère oléfinique isolant contre un claquage électrique, qui consiste à incorporer dans ce polymère au moins un dérivé de silicone-glycol tel que défini dans l'une quelconque des revendications 1 à 10.

14. Un dérivé de silicone-glycol de formule I, Ia ou II, tel que défini dans l'une quelconque des revendications 1 à 10, sous réserve que R ne soit pas un groupe alkyle en $C_4$–$C_{10}$, phényle ou tolyle lorsque E est

$$-\overset{\overset{\displaystyle O}{\|}}{C}-O-$$

et G est

$$-O-\overset{\overset{\displaystyle O}{\|}}{C}-$$

dans la formule I et lorsque G est

$$-O-\overset{\overset{\displaystyle O}{\|}}{C}-$$

dans la formule II.